# EUROPÄISCHE PATENTSCHRIFT

(11) **EP 4 303 390 B1**
(45) Veröffentlichungstag und Bekanntmachung des Hinweises auf die Patenterteilung: **08.10.2025**
(21) Anmeldenummer: 23206359.4
(22) Anmeldetag: 05.08.2022
(51) Int. Cl.: E06B 1/00, E04D 13/00, G05B 23/02, G06F 17/16, E05F 15/00, E04D 13/03, G06N 3/08

(54) **VERFAHREN ZUM BETREIBEN EINER SENSORANORDNUNG FÜR EIN GEBÄUDEVERSCHLUSSELEMENT, ENTSPRECHENDE SENSORANORDNUNG SOWIE GEBÄUDEVERSCHLUSSELEMENT MIT EINER SENSORANORDNUNG**
METHOD FOR OPERATING A SENSOR ARRANGEMENT FOR A BUILDING CLOSURE ELEMENT, CORRESPONDING SENSOR ARRANGEMENT AND BUILDING CLOSURE ELEMENT WITH A SENSOR ARRANGEMENT
PROCÉDÉ DE FONCTIONNEMENT D'UN SYSTÈME DE DÉTECTION POUR UN ÉLÉMENT DE FERMETURE DE BÂTIMENT, SYSTÈME DE DÉTECTION CORRESPONDANT ET ÉLÉMENT DE FERMETURE DE BÂTIMENT DOTÉ D'UN SYSTÈME DE DÉTECTION

(30) Priorität: 11.08.2021 DE 102021208795
(43) Veröffentlichungstag der Anmeldung: 10.01.2024
(62) Teilanmeldung aus: 22189080.9
(73) Patentinhaber: Roto Frank Dachsystem-Technologie GmbH, 97980 Bad Mergentheim (DE)
(72) Erfinder: DRES, Martin, 97996 Niederstetten (DE)
(74) Vertreter: Dietz, Christopher Friedrich

(56) Entgegenhaltungen:
- EP-A1- 3 805 505
- WO-A1-2022/017838
- US-A1- 2008 271 517

## Beschreibung

Die Erfindung betrifft ein Verfahren zum Betreiben einer Sensoranordnung für ein Gebäudeverschlusselements, wobei die Sensoranordnung wenigstens einen Zustandsgrößensensor zur Erfassung einer Zustandsgröße des Gebäudeverschlusselements aufweist. Die Erfindung betrifft weiterhin eine Sensoranordnung für ein Gebäudeverschlusselement sowie ein Gebäudeverschlusselement mit einer Sensoranordnung.

Aus dem Stand der Technik ist beispielsweise die Druckschrift DE 10 2018 112 956 A1 bekannt. Diese beschreibt ein Verfahren zur Montage eines Bauelements in einer Öffnung einer Gebäudewand, mit den folgenden Schritten: Bereitstellen des Bauelements; Befestigen von Antrieben zumindest in den Eckbereichen des Bauelements, wobei die Antriebe dazu eingerichtet sind, den Abstand zwischen dem Bauelement und der Öffnung der Gebäudewand in zwei Raumrichtungen einzustellen; Anordnen des Bauelements mit den daran befestigten Antrieben in der Öffnung der Gebäudewand; Bereitstellen mindestens einer Lagebestimmungsvorrichtung an dem Bauelement; Auslösen eines Ausrichtvorgangs des Bauelements in der Öffnung der Gebäudewand; Durchführen des Ausrichtvorgangs, in dem das Ausrichten des Bauelements durch Ändern der Abstände zwischen dem Bauelement und der Öffnung der Gebäudewand mittels der Antriebe erfolgt; Beenden des Ausrichtvorgangs bei Erreichen einer gewünschten Ausrichtung des Bauelements in der Öffnung der Gebäudewand; und Fixieren der Ausrichtung des Bauelements in der Öffnung der Gebäudewand. Weitere relevante Verfahren sind aus EP 3 805 505 A1, US 2008/271517, WO 2022/017838 und DE 10 2017 103020 A1 bekannt.

Es ist Aufgabe der Erfindung, ein Verfahren zum Betreiben einer Sensoranordnung eines Gebäudeverschlusselements vorzuschlagen, welches gegenüber bekannten Verfahren Vorteile aufweist, insbesondere besonders zuverlässig Fehler während eines Transports und/oder einer Montage des Gebäudeverschlusselements erkennt und anzeigt.

Dies wird erfindungsgemäß mit einem Verfahren zum Betreiben einer Sensoranordnung eines Gebäudeverschlusselements mit den Merkmalen des Anspruchs 1 erreicht. Dabei ist vorgesehen, dass die Sensoranordnung integraler Bestandteil des Gebäudeverschlusselements ist und während eines Transport- und/oder Montagevorgangs des Gebäudeverschlusselements zumindest zeitweise zum Erfassen der Zustandsgröße betrieben und wenigstens einmalig ein in Abhängigkeit von der erfassten Zustandsgröße bestimmtes Zustandssignal von der Sensoranordnung ausgegeben wird.

Vorteilhafte Ausgestaltungen mit zweckmäßigen Weiterbildungen der Erfindung sind in den abhängigen Ansprüchen angegeben.

Das Verfahren dient zum Betreiben der Sensoranordnung, welche Bestandteil des Gebäudeverschlusselements ist. Das Gebäudeverschlusselement kann Bestandteil eines Gebäudes sein, jedoch selbstverständlich zumindest bis zu seiner Montage an dem Gebäude auch separat von diesem vorliegen. Das Gebäude weist eine Gebäudehülle auf, zur Anordnung an beziehungsweise in welcher das Gebäudeverschlusselement vorgesehen und ausgestaltet ist. Die Gebäudehülle liegt zwischen einer Außenumgebung des Gebäudes und einem Innenraum des Gebäudes vor, separiert diese also voneinander. Die Gebäudehülle ist vorzugsweise als Wand des Gebäudes oder als Dach des Gebäudes ausgestaltet. Das Gebäudeverschlusselement dient dem zumindest zeitweisen Verschließen des Gebäudes, insbesondere dem zumindest zeitweisen Verschließen einer in der Gebäudehülle ausgebildeten Ausnehmung. Die Ausnehmung, welche mithilfe des Gebäudeverschlusselements zumindest zeitweise verschlossen ist, liegt insoweit entweder als Wandöffnung oder als Dachöffnung vor.

Die Wand ist insbesondere als Außenwand beziehungsweise Außenmauer des Gebäudes ausgestaltet. Das Dach setzt sich hingegen im Wesentlichen aus einer Dachkonstruktion und einer Dachhaut zusammen. Die Dachkonstruktion weist beispielsweise einen oder mehrere Dachsparren sowie eine oder mehrere Dachlatten auf. Die Dachlatten können hierbei in Konterlatten und Traglatten unterteilt werden, wobei das Vorliegen der Konterlatten rein optional ist. Die Traglatten sind üblicherweise angewinkelt, insbesondere senkrecht, zu den Dachsparren angeordnet und an diesen befestigt. Die Konterlatten verlaufen hingegen bevorzugt bezüglich der Traglatten angewinkelt, insbesondere senkrecht zu ihnen, und/oder parallel oder zumindest im Wesentlichen parallel zu den Dachsparren.

Die Dachhaut ist außenseitig an der Dachkonstruktion angeordnet beziehungsweise befestigt, begrenzt die Dachkonstruktion also in Richtung der Außenumgebung. Unter der Dachhaut ist insbesondere eine Dachdeckung oder eine Dachabdichtung zu verstehen. Die Dachdeckung weist beispielsweise eine Vielzahl von Dachziegeln, Dachsteinen, Dachschindeln oder dergleichen auf. Nach innen, also in Richtung des Innenraums, wird die Dachkonstruktion bevorzugt von einer Innenwand begrenzt. Die Innenwand ist hierzu an der Dachkonstruktion auf ihrer dem Innenraum zugewandten Seite angeordnet und/oder befestigt. Beispielsweise ist das Gebäudeverschlusselement über ein Innenfutter an die Innenwand angebunden.

Das Gebäudeverschlusselement ist bevorzugt als Tür oder als Fenster ausgestaltet. Das Fenster kann hierbei ein Dachfenster beziehungsweise Dachflächenfenster, insbesondere ein Wohndachfenster beziehungsweise ein Wohndachflächenfenster oder ein Oberlicht, oder alternativ ein Fassadenfenster sein. Alternativ kann das Gebäudeverschlusselement ein Rollladen beziehungsweise eine Verschattungseinrichtung sein. Das Gebäudeverschlusselement kann zum lichtdurchlässigen oder lichtundurchlässigen Verschließen der Ausnehmung ausgestaltet sein. Ist das Gebäudeverschlusselement lichtdurchlässig, so verfügt es insbesondere über eine Verglasung, welche beispielsweise als Einfachverglasung oder als Mehrfachverglasung, insbesondere als Doppelverglasung oder als Dreifachverglasung, vorliegt.

Das Gebäudeverschlusselement weist vorzugsweise einen oder mehrere Rahmen auf. Der Rahmen beziehungsweise jeder der Rahmen verfügt über mehrere Rahmenholme. Die Rahmenholme sind aneinander befestigt, nämlich derart, dass sie einen Bereich des Gebäudeverschlusselements zwischen sich aufnehmen. Die Rahmenholme bilden insoweit einen geschlossenen Rahmen. Der Rahmen beziehungsweise die mehreren Rahmenholme sind insbesondere derart ausgestaltet, dass sie die Ausnehmung der Gebäudehülle übergreifen und/oder abdecken. Vorzugsweise sind die Rahmenholme derart angeordnet und ausgestaltet, dass sie gemeinsam mit der Verglasung die Ausnehmung zumindest zeitweise vollständig verschließen. Hierzu wird die Verglasung bevorzugt von dem Rahmen getragen. Beispielsweise ist sie hierbei von den mehreren Rahmenholmen eingefasst.

Das Gebäudeverschlusselement kann permanent geschlossen sein, also zum permanenten Verschließen der Ausnehmung ausgestaltet sein. In diesem Fall verfügt es beispielsweise über lediglich einen einzigen Rahmen, welcher starr mit der Gebäudehülle verbunden ist. Es kann jedoch auch vorgesehen sein, dass das Gebäudeverschlusselement geöffnet und geschlossen werden kann. In diesem Fall weist es vorzugsweise mehrere Rahmen auf, wobei einer der Rahmen als Blendrahmen und ein anderer der Rahmen als Flügelrahmen ausgestaltet ist. Der Flügelrahmen ist bezüglich des Blendrahmens verlagerbar, insbesondere verschwenkbar. Liegt der Flügelrahmen vor, so ist die Verglasung bevorzugt an diesem befestigt und wird lediglich mittelbar über den Flügelrahmen von dem Blendrahmen getragen. Entsprechend ist die Verglasung gemeinsam mit dem Flügelrahmen bezüglich des Blendrahmens verlagerbar beziehungsweise verschwenkbar.

Die Sensoranordnung des Gebäudeverschlusselements verfügt über den wenigstens einen Zustandsgrößensensor. Mithilfe des Zustandsgrößensensor wird zumindest zeitweise die Zustandsgröße des Gebäudeverschlusselements erfasst, insbesondere gemessen. Es kann vorgesehen sein, dass die Sensoranordnung lediglich einen einzigen Zustandsgrößensensor zur Erfassung lediglich einer einzigen Zustandsgröße aufweist. Es kann jedoch auch vorgesehen sein, dass mittels des Zustandsgrößensensors mehrere unterschiedliche Zustandsgrößen erfasst werden, oder dass mehrere Zustandsgrößensensoren vorliegen, mittels welchen mehrere unterschiedliche Zustandsgrößen erfassbar sind. Allgemeiner ausgedrückt verfügt die Sensoranordnung über einen oder mehrere Zustandsgrößensensoren, mittels welchen eine oder mehrere Zustandsgrößen zumindest zeitweise erfasst beziehungsweise gemessen werden. Unter der Zustandsgröße ist eine das Gebäudeverschlusselement beschreibende Größe beziehungsweise eine einen Zustand des Gebäudeverschlusselements beschreibende Größe zu verstehen. Beispielsweise erfasst der Zustandsgrö-βensensor die Zustandsgröße unmittelbar an dem Gebäudeverschlusselement oder in einer unmittelbaren Umgebung des Gebäudeverschlusselements, beispielsweise in der Außenumgebung und/oder in dem Innenraum.

Die Sensoranordnung ist integraler Bestandteil des Gebäudeverschlusselements. Das bedeutet, dass die Sensoranordnung bereits bei der Herstellung des Gebäudeverschlusselements dem Gebäudeverschlusselement zugeordnet wird. Zumindest wird die Sensoranordnung dauerhaft an dem Gebäudeverschlusselement befestigt, insbesondere an dem Rahmen beziehungsweise einem der Rahmen. Es erfolgt also keine lediglich temporäre Befestigung der Sensoranordnung an dem Gebäudeverschlusselement. Die Befestigung kann dabei bevorzugt derart erfolgen, dass die Sensoranordnung nicht oder zumindest nicht beschädigungsfrei von dem Gebäudeverschlusselement getrennt werden kann. Beispielsweise ist die Sensoranordnung in einer in dem Gebäudeverschlusselement ausgebildeten Ausnehmung angeordnet, sodass sie aus der Außenumgebung nicht oder lediglich teilweise sichtbar ist. Bevorzugt wird die Ausnehmung nach der Anordnung der Sensoranordnung in ihr verschlossen, sodass die Sensoranordnung den optischen Eindruck des Gebäudeverschlusselements nicht beeinflusst.

Nach der Herstellung des Gebäudeverschlusselements erfolgt ein Transport- und/oder Montagevorgang. Der Transportvorgang umfasst hierbei insbesondere einen Transport des Gebäudeverschlusselements von einem Werk, in welchem das Gebäudeverschlusselement hergestellt wird, bis hin zu einem Montageort des Gebäudeverschlusselements, an welchem das Gebäudeverschlusselement montiert wird, also der Montagevorgang vorgenommen wird. Der Montageort entspricht bevorzugt einem Standort des Gebäudes. Es kann jedoch auch vorgesehen sein, dass der Transportvorgang erst später beginnt, beispielsweise bei einem Zwischenhändler, zu welchem das Gebäudeverschlusselement ausgehend von dem Werk verbracht wird. Der Transportvorgang umfasst in diesem Fall den Transport des Gebäudeverschlusselements von dem Zwischenhändler bis zu dem Montageort.

Der Montagevorgang des Gebäudeverschlusselements wird an dem Montageort vorgenommen. Unter dem Montagevorgang ist insbesondere ein Vorgang ab einem Entfernen einer das Gebäudeverschlusselement zumindest teilweise einschließenden Verpackung bis hin zu einer endgültigen Anordnung des Gebäudeverschlusselements in der Ausnehmung der Gebäudehülle zu verstehen. Der Montagevorgang beginnt insoweit mit dem Entfernen der Verpackung, beispielsweise mit einem Beginn des Entfernens der Verpackung oder unmittelbar nach dem vollständigen Entfernen der Verpackung. Er endet, sobald das Gebäudeverschlusselement in der Ausnehmung der Gebäudehülle angeordnet und dort befestigt ist.

Beispielsweise wird das Ende des Montagevorgangs der Sensoranordnung durch eine Eingabe mitgeteilt. Hierzu weist die Sensoranordnung eine entsprechende Eingabeeinrichtung auf. Die Eingabeeinrichtung kann eine physische Einrichtung sein, beispielsweise ein Knopf, ein Schalter oder dergleichen. Sie kann jedoch auch an einem Mobilgerät vorliegen, welches über eine Datenübertragungsverbindung mit der Sensoranordnung in Verbindung steht. In diesem Fall ist es beispielsweise vorgesehen, dass der die Montage des Gebäudeverschlusselements vornehmende Monteur eine Kennung des Gebäudeverschlusselements mit dem Mobilgerät erfasst, beispielsweise durch manuelle Eingabe eines Codes oder durch Einscannen eines an dem Gebäudeverschlusselement befindlichen QR-Codes. Das Mobilgerät übermittelt nachfolgend der Sensoranordnung das Ende des Montagevorgangs, beispielsweise unmittelbar über eine Datenübertragungsverbindung zwischen dem Mobilgerät und der Sensoranordnung oder lediglich mittelbar über eine Zentralrecheneinrichtung, welche von dem Mobilgerät und der Sensoranordnung verschieden ist. Die Zentralrecheneinrichtung steht hier sowohl mit dem Mobilgerät als auch mit dem Gebäudeverschlusselement in Datenübertragungsverbindung. Die Datenübertragungsverbindung ist in jedem Fall bevorzugt drahtlos.

Die Sensoranordnung ist dazu vorgesehen und ausgestaltet, bereits während des Transport- und/oder Montagevorgangs zumindest zeitweise die Zustandsgröße zu erfassen beziehungsweise zu messen. In Abhängigkeit von der erfassten Zustandsgröße wird das Zustandssignal bestimmt und von der Sensoranordnung ausgegeben. Das Ausgeben kann beispielsweise unmittelbar über eine Anzeigeeinrichtung des Gebäudeverschlusselements beziehungsweise der Sensoranordnung erfolgen. Es kann jedoch auch vorgesehen sein, dass das Zustandssignal an das Mobilgerät und/oder die Zentralrecheneinrichtung übermittelt wird. Das Ausgeben erfolgt grundsätzlich unabhängig von dem Transport- und/oder Montagevorgang. Es kann also vorgesehen sein, das Ausgeben während des Transport- und/oder Montagevorgangs vorzunehmen. Alternativ wird es erst nach dem Transport- und/oder Montagevorgang durchgeführt. Das Zustandssignal beschreibt aufgrund seiner Abhängigkeit von der erfassten Zustandsgröße unmittelbar den Zustand des Gebäudeverschlusselements während des Transport- und/oder Montagevorgangs. Entsprechend ist eine Aussage über den Zustand bereits zu diesem Zeitpunkt und nicht erst nach Abschluss des Montagevorgangs möglich. Insbesondere erlaubt das Ausgeben des Zustandssignals eine zuverlässige Qualitätskontrolle während des Transport- und/oder Montagevorgangs. Es kann vorgesehen sein, dass das Zustandssignal erst unmittelbar am Ende des Transport- und/oder Montagevorgangs ausgegeben wird. Es kann jedoch auch vorgesehen sein, dass das Zustandssignal mehrfach ausgegeben wird, beispielsweise periodisch. Insbesondere ist es vorgesehen, das Zustandssignal während des Transportvorgangs und/oder des Montagevorgangs jeweils zumindest einmalig auszugeben, bevorzugt jedoch jeweils mehrmalig, insbesondere periodisch. Somit kann anhand des Zustandssignals zwischen dem Transportvorgang und dem Montagevorgang unterschieden werden und beispielsweise auf das Auftreten einer Beschädigung des Gebäudeverschlusselements während des Transportvorgangs und somit bereits vor dem Montagevorgang oder erst während des Montagevorgangs und somit nach dem Transportvorgang geschlossen werden.

Beispielsweise wird mittels der Sensoranordnung die Einhaltung geltender Vorschriften hinsichtlich einer Anbindung des Gebäudeverschlusselements an das Gebäude überwacht. So kann es insbesondere vorgesehen sein, die Temperatur an dem Gebäudeverschlusselement zu messen, insbesondere auf seiner Innenseite, und die gemessene Temperatur mit einer Innen- und/oder einer Außentemperatur zu vergleichen. Die Innen- und/oder einer Außentemperatur kann ebenfalls gemessen werden oder über die Datenübertragungsverbindung empfangen werden. Ist eine Differenz zwischen der Innentemperatur und der gemessenen Temperatur zu groß beziehungsweise größer als ein erster Grenzwert und/oder eine Differenz zwischen der gemessenen Temperatur und der Außentemperatur zu klein beziehungsweise kleiner als ein zweiter Grenzwert, so wird auf eine fehlerhafte Montage des Gebäudeverschlusselements erkannt, insbesondere auf eine fehlerhafte Anbindung des Gebäudeverschlusselements an das Gebäude. Entsprechend wird das ausgegebene Zustandssignal mit einer Fehlermeldung versehen.

Eine Weiterbildung der Erfindung sieht vor, dass die Sensoranordnung eine Stromquelle aufweist, die über einen Schalter an den Zustandsgrößensensor und/oder eine mit dem Zustandsgrößensensor elektrisch verbundene Auswertungselektronik elektrisch angeschlossen ist, wobei der Schalter nach einer Herstellung des Gebäudeverschlusselements zunächst in einer Deaktivierungseinstellung vorliegt, in welcher der Zustandsgrößensensor und/oder die Auswertungselektronik elektrisch von der Stromquelle separiert sind, und vor dem Transport- und/oder Montagevorgang in eine Aktivierungseinstellung gebracht wird, in welcher der Zustandsgrößensensor und/oder die Auswertungselektronik von der Stromquelle mit elektrischem Strom versorgt werden.

Die Herstellung des Gebäudeverschlusselements erfolgt vor dem Transport- und/oder Montagevorgang. Beispielsweise wird das Gebäudeverschlusselement nach seiner Herstellung in dem Werk zunächst gelagert, insbesondere in demselben Werk, in welchem es hergestellt wird. Erst nach dieser Lagerung erfolgt der Transport- und/oder Montagevorgang. Um einen unnötigen Stromverbrauch der Sensoranordnung zu vermeiden, ist diese daher zunächst mithilfe des Schalters deaktiviert, nämlich indem der Schalter in der Deaktivierungseinstellung vorliegt. Erst bei einem bevorstehenden Transport- und/oder Montagevorgang, beispielsweise unmittelbar vor diesem oder zu Beginn von diesem, wird der Schalter in die Aktivierungseinstellung gebracht, in welcher die Sensoranordnung aktiviert ist.

Die Sensoranordnung verfügt zusätzlich zu dem Zustandsgrößensensor über die Stromquelle und die Auswertungselektronik. Die Stromquelle ist über den Schalter an den Zustandsgrößensensor und/oder die Auswertungselektronik elektrisch angeschlossen. Die Stromquelle liegt bevorzugt als Batterie oder dergleichen vor, wobei die Sensoranordnung mit der in der Batterie gespeicherten elektrischen Energie lediglich über eine begrenzte Zeitspanne betrieben werden kann. Die Auswertungselektronik dient dem Auswerten eines von dem Zustandsgrößensensor gelieferten Messwerts. Vorzugsweise wird das Bestimmen des Zustandssignals und das Ausgeben des Zustandssignals von der Auswertungselektronik vorgenommen.

Der Schalter ist beispielsweise ein mechanischer oder ein elektronischer Schalter. Vorzugsweise wird er bei einem Verlassen des Werks durch das Gebäudeverschlusselement aus der Deaktivierungseinstellung in die Aktivierungseinstellung gebracht, sodass nachfolgend die Sensoranordnung aktiviert ist und zumindest zeitweise zum Erfassen der Zustandsgröße betrieben und wenigstens einmalig das in Abhängigkeit von der erfassten Zustandsgröße bestimmte Zustandssignal ausgegeben wird. Eine solche Vorgehensweise stellt eine zielgerichtete Qualitätskontrolle sicher.

Eine Weiterbildung der Erfindung sieht vor, dass als Zustandsgrößensensor ein Beschleunigungssensor verwendet wird, mittels welchem die als Beschleunigung vorliegende Zustandsgröße gemessen wird, wobei bei einem Überschreiten eines Beschleunigungsschwellenwerts durch die gemessene Beschleunigung während des Transport- und/oder Montagevorgangs das ausgegebene Zustandssignal mit einer Fehlermeldung versehen wird. Der Beschleunigungssensor misst die Beschleunigung des Gebäudeverschlusselements in wenigstens einer Richtung, vorzugsweise in mehreren senkrecht aufeinander stehenden Richtungen, besonders bevorzugt in drei senkrecht aufeinander stehenden Richtungen.

Ist die Beschleunigung größer als der Beschleunigungsschwellenwert, so wird auf eine Beschädigung des Gebäudeverschlusselement geschlossen und entsprechend die Fehlermeldung als Bestandteil des Zustandssignals ausgegeben. Der Beschleunigungsschwellenwert ist bevorzugt derart gewählt, dass eine mechanische Beschädigung des Gebäudeverschlusselements zuverlässig nicht auftritt, solange die auf das Gebäudeverschlusselement wirkende Beschleunigung kleiner ist als der Beschleunigungsschwellenwert. Dies ermöglicht eine zuverlässige Erkennung einer Beschädigung des Gebäudeverschlusselement während des Transport- und/oder Montagevorgangs.

Eine Weiterbildung der Erfindung sieht vor, dass als Zustandsgrößensensor ein Positionssensor verwendet wird, mittels welchem die als Istposition vorliegende Zustandsgröße gemessen wird, wobei bei einer Abweichung der gemessenen Istposition von einer in der Sensoranordnung hinterlegten Sollposition während des Transport- und/oder Montagevorgangs das ausgegebene Zustandssignal mit einer Fehlermeldung versehen wird. Mithilfe der Sensoranordnung wird also überwacht, ob das Gebäudeverschlusselement an dem vorgesehenen Montageort verbaut wird. Hierzu wird unter Verwendung des Positionssensors die geodätische Istposition des Gebäudeverschlusselements ermittelt beziehungsweise gemessen. Der Positionssensor ist beispielsweise Die Istposition wird anschließend mit der Sollposition verglichen, welche in der Sensoranordnung hinterlegt ist. Weicht die Istposition von der Sollposition ab, so wird die Fehlermeldung als Bestandteil des Zustandssignals ausgegeben. Mit einer solchen Vorgehensweise kann zuverlässig festgestellt werden, ob das Gebäudeverschlusselement seinen korrekten Montageort erreicht hat und an diesem verbaut wurde. Beispielsweise wird die Sollposition vor dem Transport- und/oder Montagevorgang an die Sensoranordnung übermittelt und in dieser hinterlegt, insbesondere von der Zentralrecheneinrichtung und/oder dem Mobilgerät.

Eine Weiterbildung der Erfindung sieht vor, dass als Zustandsgrößensensor ein Drehwinkelsensor verwendet wird, mittels welchem die als Istdrehwinkel vorliegende Zustandsgröße gemessen wird, wobei
- bei einer Abweichung des gemessenen Istdrehwinkels von einem in der Sensoranordnung hinterlegten Solldrehwinkel während des Transport- und/oder Montagevorgangs das ausgegebene Zustandssignal mit einer Fehlermeldung versehen wird, oder wobei
- bei einem Überschreiten eines Drehwinkelgrenzwerts durch einen aus dem Istdrehwinkel während des Transport- und/oder Montagevorgangs aggregierten Gesamtdrehwinkel das ausgegebene Zustandssignal mit einer Fehlermeldung versehen wird.

Mithilfe des Drehwinkelsensors kann die Drehwinkelstellung des Gebäudeverschlusselements gemessen werden, insbesondere eine geodätische Ausrichtung des Gebäudeverschlusselements in wenigstens einer Raumrichtung. Beispielsweise wird der Beschleunigungssensor als Drehwinkelsensor verwendet und aus der auf das Gebäudeverschlusselement wirkenden Beschleunigung auf den Istdrehwinkel geschlossen.

Mithilfe des Istdrehwinkels können unterschiedliche Auswertungen vorgenommen werden. So kann zum einen geprüft werden, ob der Montagevorgang korrekt abgeschlossen wurde, indem der Istdrehwinkel mit dem hinterlegten Solldrehwinkel verglichen wird. Der Solldrehwinkel wird bevorzugt analog zu der Sollposition an die Sensoranordnung übermittelt und dort hinterlegt. Weicht der Istdrehwinkel von dem Solldrehwinkel ab, so wird die Fehlermeldung als Bestandteil des Zustandssignals ausgegeben. Der Istdrehwinkel beschreibt beispielsweise eine Neigung des Gebäudeverschlusselements, mit welcher dieses nach Abschluss des Montagevorgangs vorliegen soll. Insbesondere entspricht der Solldrehwinkel einer Dachneigung des Dachs, an beziehungsweise in welchem das Gebäudeverschlusselement verbaut wird.

Alternativ oder zusätzlich wird der Istdrehwinkel zu dem Gesamtdrehwinkel aggregiert. Das bedeutet, dass der Istdrehwinkel mehrfach gemessen und aus den mehreren Istdrehwinkeln auf den Gesamtdrehwinkel geschlossen wird. Der Gesamtdrehwinkel beschreibt denjenigen Drehwinkel, um welchen das Gebäudeverschlusselement während des Transport- und/oder Montagevorgangs, insbesondere während des gesamten Transport- und/oder Montagevorgangs, insgesamt gedreht wurde. Überschreitet dieser Gesamtdrehwinkel den Drehwinkelgrenzwerts, so wird auf eine Beschädigung des Gebäudeverschlusselements geschlossen und die Fehlermeldung als Bestandteil des Zustandssignals ausgegeben. Die beiden beschriebenen Vorgehensarten ermöglichen eine besonders zuverlässige Qualitätskontrolle des Transport- und/oder Montagevorgangs des Gebäudeverschlusselements.

Eine Weiterbildung der Erfindung sieht vor, dass als Zustandsgrößensensor ein Geräuschsensor verwendet wird, mittels welchem die als Geräuschpegel vorliegende Zustandsgröße gemessen wird, wobei bei einem Überschreiten eines Geräuschpegelschwellenwerts durch den gemessenen Geräuschpegel während des Transport- und/oder Montagevorgangs das ausgegebene Zustandssignal mit einer Fehlermeldung versehen wird. Eine solche Vorgehensweise ermöglicht beispielsweise einen effektiven Schutz des Monteurs vor zu hoher Lautstärke während des Montagevorgangs. Der Geräuschpegelschwellenwert wird hierzu vorzugsweise derart gewählt, dass bei einem dem Geräuschpegelschwellenwert entsprechenden Geräuschpegel keine gesundheitliche Beeinträchtigung des Monteurs auftreten kann beziehungsweise davon ausgegangen werden kann, dass der Monteur nicht von der Montage abgelenkt wird. Somit werden Fehler bei der Montage zuverlässig verhindert.

Eine Weiterbildung der Erfindung sieht vor, dass der Geräuschsensor als Mikrofon ausgestaltet ist und zur Spracherkennung eines Sprachbefehls verwendet wird, wobei eine Aktuatorik des Gebäudeverschlusselements während des Transport- und/oder Montagevorgangs in Abhängigkeit von dem Sprachbefehl angesteuert wird. Eine solche Vorgehensweise erleichtert das Durchführen des Montagevorgangs durch den Monteur. Die Aktuatorik dient beispielsweise einem Öffnen und Schließen des Gebäudeverschlusselements, insoweit also einem Verlagern des Flügelrahmens bezüglich des Blendrahmens. Alternativ dient die Aktuatorik einem Verlagern einer Verschattungseinrichtung des Gebäudeverschlusselements. Bei einem bestimmten festgelegten Sprachbefehl, welcher mithilfe des Mikrofons erkannt wird, wird die Aktuatorik entsprechend angesteuert. Insbesondere sind in der Sensoranordnung mehrere unterschiedliche Sprachbefehle hinterlegt, welche unterschiedliche Betriebsarten der Aktuatorik zugeordnet sind.

Eine Weiterbildung der Erfindung sieht vor, dass als Zustandsgrößensensor mindestens einer der folgenden Sensoren verwendet wird: Helligkeitssensor, Temperatursensor, Wärmeflusssensor, Staubsensor, Luftfeuchtigkeitssensor, VOC-Sensor, CO₂-Sensor, O₃-Sensor, Strömungsgeschwindigkeitssensor und Lidarsensor. Wenigstens einer der genannten Sensoren kann zusätzlich oder alternativ zu den bereits vorstehend genannten Sensoren, also dem Beschleunigungssensor, dem Positionssensor, dem Drehwinkelsensor, dem Geräuschsensor und/oder dem Mikrofon, verwendet werden.

Die Sensoranordnung kann grundsätzlich eine beliebige Anzahl an Zustandsgrößensensoren aufweisen und eine beliebige Anzahl an Zustandsgrößen erfassen. Das bedeutet, dass aus den vorstehend genannten Sensoren genau einer oder auch mehrere als Bestandteil der Sensoranordnung vorliegen können. Mithilfe des Helligkeitssensors wird eine Helligkeit, mithilfe des Temperatursensors eine Temperatur, mithilfe des Wärmeflusssensors ein Wärmefluss, mithilfe des Staubsensors eine Staubdichte, mithilfe des Luftfeuchtigkeitssensors eine Luftfeuchtigkeit, mithilfe des VOC-Sensors eine Konzentration von flüchtigen organischen Verbindungen (VOC), mithilfe des CO₂-Sensors eine CO₂-Konzentration, mithilfe des O₃-Sensors eine Ozonkonzentration, mithilfe des Strömungsgeschwindigkeitssensors eine Strömungsgeschwindigkeit von Luft in der Umgebung des Gebäudeverschlusselements und mithilfe des Lidarsensors ein Abstand zu einem Festkörper in der Umgebung des Gebäudeverschlusselements erfasst.

Mindestens eine der genannten Größen dient dazu, Bedingungen zu erkennen, welche zu einer Beschädigung des Gebäudeverschlusselements führen können, sodass das Zustandssignal den Zustand des Gebäudeverschlusselements wiederspiegelt. Wie bereits erläutert, ist auf diese Art und Weise eine zuverlässige Qualitätskontrolle realisiert, da auch die Umgebungsbedingungen des Gebäudeverschlusselements beurteilt werden, die dessen Zustand unweigerlich beeinflussen und daher als Zustandsgrößen gelten.

Eine Weiterbildung der Erfindung sieht vor, dass mittels eines auf einer ersten Seite des Gebäudeverschlusselements angeordneten Schallemitters Schall mit einer bestimmten Schallintensität emittiert und mittels des als Geräuschsensor ausgestalteten Zustandsgrößensensors ein Geräuschpegel des Schalls auf einer der ersten Seite abgewandten zweiten Seite des Gebäudeverschlusselements ermittelt und als Zustandsgröße verwendet wird. Beispielsweise ist der Schallemitter auf einer der Außenumgebung zugewandten Seite des Gebäudeverschlusselements und der Geräuschsensor auf auf einer dem Innenraum zugewandten Seite des Gebäudeverschlusselements angeordnet oder umgekehrt.

Mithilfe des Schallemitters wird Schall ausgesandt, nämlich mit der bestimmten, genau definierten Schallintensität. Auf der zweiten Seite des Gebäudeverschlusselements wird der emittierte Schall mithilfe des Geräuschsensors gemessen und als Geräuschpegel festgehalten. Beispielsweise erfolgt das Emittieren des Schalls bei einer bestimmten Frequenz oder über mehrere Frequenzen hinweg. Es kann auch vorgesehen sein, dass die Frequenz des Schalls während des Emittieren des Schalls verändert wird, insbesondere kontinuierlich oder mit definierten Sprüngen. Der Geräuschpegel wird als Zustandsgröße verwendet und das Zustandssignal in Abhängigkeit von ihm ermittelt. Hierdruch kann eine Kontrolle des Montagevorgangs hinsichtlich des Schallschutzes erfolgen, insbesondere eine Kontrolle der Anbindung des Gebäudeverschlusselements an das Gebäude.

Vorzugsweise wird sichergestellt, dass das Emittieren des Schalls und das Erfassen des Geräuschpegels bei einem definierten Zustand des Gebäudeverschlusselements erfolgt, insbesondere bei geschlossenem Gebäudeverschlusselement und definiertem Verschattungsgrad (falls eine Verschattungseinrichtung vorhanden ist). Die beschriebene Vorgehensweise ermöglicht eine zuverlässige Abschätzung des Zustands des Gebäudeverschlusselements.

Eine Weiterbildung der Erfindung sieht vor, dass anhand der erfassten Zustandsgröße auf einen Beginn und/oder ein Ende des Transport- und/oder Montagevorgangs erkannt wird, wobei ein Zeitpunkt des Beginns und/oder ein Zeitpunkt des Endes im Rahmen des Zustandssignals ausgegeben wird. Die erfasste Zustandsgröße wird insoweit ausgewertet und auf den Beginn beziehungsweise das Ende ausgewertet. Besonders effektiv kann dies beispielsweise anhand der Beschleunigung und/oder der Istposition des Gebäudeverschlusselements erfolgen. Tritt über einen bestimmten Zeitraum hinweg eine Beschleunigung und/oder eine Veränderung der Istposition auf, so wird auf die Durchführung des Transport- und/oder Montagevorgangs erkannt. Unter der Beschleunigung des Gebäudeverschlusselements ist in diesem Kontext vorzugsweise eine von der normalen Erdbeschleunigung abweichende Beschleunigung zu verstehen. Der Transport- und/oder Montagevorgang liegt insoweit dann vor, wenn die gemessene Beschleunigung, korrigiert um die Erdbeschleunigung, von null verschieden ist beziehungsweise einen Schwellenwert überschreitet.

Der Zeitpunkt des Beginns des Transport- und/oder Montagevorgangs wird bevorzugt auf denjenigen Zeitpunkt gesetzt, an welchem die Beschleunigung, insbesondere die von null verschiedene beziehungsweise den Schwellenwert überschreitende Beschleunigung, und/oder die Veränderung der Istposition begonnen hat. Umgekehrt kann auf das Ende des Transport- und/oder Montagevorgangs erkannt werden, indem derjenige Zeitpunkt bestimmt wird, in welchem die Beschleunigung gleich null ist beziehungsweise den Schwellenwert unterschreitet und/oder die Istposition keine Veränderung mehr zeigt. Der Zeitpunkt des Beginns beziehungsweise der Zeitpunkt des Endes werden als Bestandteil des Zustandssignals ausgegeben. Auch dies ermöglicht eine zuverlässige Qualitätskontrolle, nämlich durch die Bestimmung der Zeitdauer des Transport- und/oder Montagevorgangs. Eine unzulässig lange Lagerung des Gebäudeverschlusselements kann hierdurch erkannt werden.

Eine Weiterbildung der Erfindung sieht vor, dass anhand der erfassten Zustandsgröße auf den Abschluss eines Arbeitsschritts in einer Abfolge aus mehreren Arbeitsschritten, insbesondere Transport- und/oder Montageschritten, erkannt und der erkannte Arbeitsschritt und/oder ein auf diesen in der Abfolge folgender Arbeitsschritt im Rahmen des Zustandssignals ausgegeben wird. Unter den Arbeitsschritten sind beispielsweise das Entfernen einer Verpackung des Gebäudeverschlusselements, ein Anordnen des Gebäudeverschlusselements in der Ausnehmung der Gebäudehülle, ein Befestigen des Gebäudeverschlusselements an der Gebäudehülle und eine Inbetriebnahme des Gebäudeverschlusselements zu verstehen. Anhand der Zustandsgröße kann auf den Abschluss des jeweiligen Arbeitsschritts erkannt werden, vorzugsweise indem auf charakteristische Muster erkannt wird, die während des jeweiligen Arbeitsschritts auftreten. Der erkannte Arbeitsschritt oder der auf ihn folgende Arbeitsschritt wird nachfolgend als Bestandteil des Zustandssignals ausgegeben. Hierdurch erhält der Monteur eine Hilfestellung beziehungsweise eine konkrete Anleitung, auf welche Art und Weise das Gebäudeverschlusselement zu montieren ist.

Eine Weiterbildung der Erfindung sieht vor, dass das Ausgeben des Zustandssignals ein Anzeigen des Zustandssignals für einen Monteur des Gebäudeverschlusselements, insbesondere mittels der Sensoranordnung und/oder des Mobilgeräts und/oder der Zentralrecheneinrichtung, und/oder ein Übermitteln des Zustandssignals an eine Zentralrecheneinrichtung umfasst. Das Zustandssignal wird insoweit zum Beispiel unmittelbar mithilfe des Sensoranordnung ausgegeben. Vorzugsweise verfügt die Sensoranordnung hierzu über eine entsprechende Anzeigeeinrichtung. Zusätzlich oder alternativ kann das Zustandssignal an das Mobilgerät beziehungsweise die Zentralrecheneinrichtung übermittelt und dort angezeigt werden. Das Übermitteln des Zustandssignals an das Mobilgerät kann hierbei entweder unmittelbar über eine Datenübertragungsverbindung zwischen der Sensoranordnung und Mobilgerät erfolgen oder aber lediglich mittelbar über die Zentralrecheneinrichtung. Hierzu steht die Zentralrecheneinrichtung sowohl mit der Sensoranordnung als auch dem Mobilgerät in Datenübertragungsverbindung. Dies ermöglicht eine lokale Qualitätskontrolle durch den Monteur selbst oder aber eine zentrale Qualitätskontrolle durch den Hersteller des Gebäudeverschlusselements.

Eine Weiterbildung der Erfindung sieht vor, dass die Zustandsgröße mehrfach erfasst und in einem Zustandsgrößenverlauf festgehalten wird. Der Zustandsgrößenverlauf beschreibt insoweit den Verlauf der Zustandsgröße über der Zeit. Bevorzugt wird die Zustandsgröße in dem Zustandsgrö-βenverlauf zusammen mit einer den Zeitpunkt des Erfassens der Zustandsgröße beschreibenden Zeitstempel abgelegt. Vorzugsweise wird also die Zustandsgröße während des Transport- und/oder Montagevorgangs mehrfach, insbesondere periodisch, erfasst und ihr Verlauf in dem Zustandsgrößenverlauf festgehalten.

Der Zustandsgrößenverlauf kann beispielsweise in der Sensoranordnung gespeichert sein. In diesem Fall wird das Ausgeben des Zustandssignals vorzugsweise lediglich einmalig vorgenommen, insbesondere am Ende des Transport- und/oder Montagevorgangs oder nach dem Transport- und/oder Montagevorgang. Hierdurch wird der zum Ausgeben des Zustandssignals notwendige Energieaufwand deutlich reduziert. Alternativ kann die Zustandsgröße nach ihrem jeweiligen Erfassen auch unmittelbar übertragen werden, beispielsweise an das Mobilgerät und/oder die Zentralrecheneinrichtung. In diesem Fall liegt der Zustandsgrößenverlauf in dem Mobilgerät beziehungsweise der Zentralrecheneinrichtung vor. Dies hat den Vorteil, dass der aktuelle Zustand des Gebäudeverschlusselements dem Mobilgerät beziehungsweise der Zentralrecheneinrichtung stets bekannt ist.

Eine Weiterbildung der Erfindung sieht vor, dass die erfasste Zustandsgröße mehrfach zum Zusammenstellen des Zustandsgrößenverlaufs in einem Datenspeicher der Sensoranordnung hinterlegt wird, wobei der Zustandsgrößenverlauf im Rahmen des Zustandssignals ausgegeben wird. Auf eine solche Vorgehensweise wurde bereits hingewiesen. Sie ermöglicht einen besonders energiesparenden Betrieb der Sensoranordnung, da das Ausgeben des Zustandssignals vergleichsweise selten, insbesondere lediglich einmalig, erfolgt. Vorzugsweise erfolgt das Ausgeben des Zustandsgrößenverlaufs also seltener als das Erfassen der Zustandsgröße.

Eine Weiterbildung der Erfindung sieht vor, dass der Zustandsgrößenverlauf aus der mit dem Zustandssignal übermittelten Zustandsgröße zusammengestellt wird. Das bedeutet, dass das Zustandssignal mehrfach von der Sensoranordnung ausgegeben wird, insbesondere bei jedem Erfassen der Zustandsgröße. Aus dem ausgegebenen Zustandssignal beziehungsweise der mit ihm übermittelten Zustandsgröße wird anschließend der Zustandsgrößenverlauf von einer externen Einrichtung zusammengestellt, beispielsweise von der Zentralrecheneinrichtung oder dem Mobilgerät. Hierdurch ist ist eine zeitlich aufgelöste Betrachtung des Transport- und/oder Montagevorgangs durch diese Einrichtungen möglich.

Eine Weiterbildung der Erfindung sieht vor, dass die Sensoranordnung nach dem Ende des Transport- und/oder Montagevorgangs dauerhaft deaktiviert wird, oder dass die Sensoranordnung nach dem Ende des Transport- und/oder Montagevorgangs weiterhin zumindest zeitweise zum Erfassen der Zustandsgröße betrieben und periodisch das in Abhängigkeit von der erfassten Zustandsgröße bestimmte Zustandssignal von der Sensoranordnung ausgegeben wird. Gemäß einer ersten Variante des beschriebenen Verfahrens wird die Sensoranordnung nach Abschluss des Transport- und/oder Montagevorgangs nicht mehr benötigt und wird entsprechend deaktiviert, beispielsweise indem die Stromquelle von dem Zustandsgrößensensor beziehungsweise der Auswertungselektronik getrennt wird, vorzugsweise permanent und irreversibel. Die Sensoranordnung dient bei einer solchen Vorgehensweise allein der Auswertung des Transport- und/oder Montagevorgangs.

Gemäß einer zweiten Variante wird die Sensoranordnung auch nach dem Transport- und/oder Montagevorgang verwendet, insbesondere um einen Betrieb des Gebäudeverschlusselements zu überwachen. Vorzugsweise wird die Sensoranordnung hierbei für eine Fehlererkennung herangezogen, wobei die erfasste Zustandsgröße ausgewertet wird, um einen Fehler beziehungsweise einen Defekt des Gebäudeverschlusselements zu erkennen. Tritt ein solcher Fehler beziehungsweise ein solcher Defekt auf, so wird eine Fehlermeldung mit dem Zustandssignal ausgegeben. Hierdurch ist auch ein zuverlässiger Betrieb des Gebäudeverschlusselements sichergestellt. Beispielsweise wird die Fehlermeldung mit dem Zustandssignal an das Mobilgerät und/oder die Zentralrecheneinrichtung übermittelt. Von diesen werden geeignete Maßnahmen eingeleitet. Zum Beispiel wird ein Servicetechniker zu dem Gebäudeverschlusselement entsandt.

Eine Weiterbildung der Erfindung sieht vor, dass in einer Trainingsbetriebsart einer Transport- und/oder Montageüberwachungseinrichtung nach dem Transport- und/oder Montagevorgang eine Transport- und/oder Montagequalität erfasst und mittels der Transport- und/oder Montageüberwachungseinrichtung mit der Zustandsgröße und/oder dem Zustandsgrößenverlauf korreliert wird und/oder in einer Überwachungsbetriebsart der Transport- und/oder Montageüberwachungseinrichtung mittels der Transport- und/oder Montageüberwachungseinrichtung aus der Zustandsgröße und/oder dem Zustandsgrößenverlauf die Transport- und/oder Montagequalität ermittelt wird.

Die Trainingsbetriebsart dient einem Einlernen der Transport- und/oder Montageüberwachungseinrichtung. Diese kann im Übrigen das vorstehend bereits beschriebene Mobilgerät oder die Zentralrecheneinrichtung sein. Am Ende des Transport- und/oder Montagevorgangs oder nach diesem wird die Transport- und/oder Montagequalität erfasst. Dies geschieht insbesondere durch eine manuelle Eingabe derselben. Beispielsweise gibt der Monteur und/oder ein die Transport- und/oder Montagequalität überprüfender Kontrolleur die Transport- und/oder Montagequalität manuell ein. Dies kann unmittelbar an der Sensoranordnung erfolgen, welche zu diesem Zweck eine entsprechende Eingabeeinrichtung aufweist. Vorzugsweise erfolgt das Eingeben der Transport- und/oder Montagequalität jedoch an der Transport- und/oder Montageüberwachungseinrichtung oder dem Mobilgerät. Beispielsweise wird hierzu sowohl eine Kennung des Gebäudeverschlusselements als auch die Transport- und/oder Montagequalität abgefragt und nachfolgend an die Transport- und/oder Montageüberwachungseinrichtung übermittelt. Das Abfragen der Kennung kann das manuelle Eingeben der Kennung umfassen oder aber beispielsweise das Einscannen einer an dem Gebäudeverschlusselement angebrachten Markierung, insbesondere eines QR-Codes.

Die Transport- und/oder Montageüberwachungseinrichtung korreliert die übermittelte Transport- und/oder Montagequalität mit der Zustandsgröße beziehungsweise dem Zustandsgrößenverlauf. Das Korrelieren erfolgt bevorzugt durch maschinelles Lernen und/oder dem Durchführen einer Regressionsanalyse beziehungsweise einer Regression. Im Rahmen der Regression dient die Transport- und/oder Montagequalität als Regresssand und die Zustandsgröße beziehungsweise der Zustandsgrößenverlauf als Regressor. Als Regression wird beispielsweise eine lineare Regression verwendet. Im Rahmen des Korrelierens wird also, beispielsweise mittels der Regression, die Transport- und/oder Montagequalität in Beziehung zu der Zustandsgröße beziehungsweise dem Zustandsgrößenverlauf gesetzt. Hieraus ergibt sich während der Trainingsbetriebsart eine Korrelation, die nachfolgend genutzt werden kann, um aus der Zustandsgröße beziehungsweise dem Zustandsgrößenverlauf auf die Transport- und/oder Montagequalität zu schließen. Die Regression wird vorzugsweise mittels eines neuronalen Netzwerks vorgenommen. Grundsätzlich kann hierbei Deep Learning Verwendung finden, um besonders aussagekräftige Ergebnisse zu erzielen.

Zusätzlich oder alternativ zu der Trainingsbetriebsart kann die Transport- und/oder Montageüberwachungseinrichtung in der Überwachungsbetriebsart betrieben werden. Vorzugsweise ist es vorgesehen, die Transport- und/oder Montageüberwachungseinrichtung zunächst in der Trainingsbetriebsart zu trainieren und sie anschließend in der Überwachungsbetriebsart zu betreiben. In der Überwachungsbetriebsart ermittelt die Transport- und/oder Montageüberwachungseinrichtung aus der Zustandsgröße beziehungsweise dem Zustandsgrößenverlauf die Transport- und/oder Montagequalität. Hierdurch ist es möglich, anhand der Zustandsgröße beziehungsweise deren Verlauf unmittelbar die Transport- und/oder Montagequalität abzuschätzen, ohne dass diese aufwendig ermittelt und manuell eingegeben werden muss.

Beispielsweise ist es vorgesehen, in der Überwachungsbetriebsart die Transport- und/oder Montagequalität zu ermitteln und mit einem Grenzwert zu vergleichen. Wird dieser von der Transport- und/oder Montagequalität unterschritten, so wird ein Fehler angezeigt beziehungsweise ein den Fehler signalisierendes Signal ausgegeben. Beispielsweise wird hierauf eine Kontrolle des Gebäudeverschlusselements vorgenommen und eventuell aufgefundene Transport- und/oder Montagefehler beziehungsweise -schäden beseitigt. Zusätzlich wird bevorzugt die Zustandsgröße beziehungsweise der Zustandsgrößenverlauf sowie eine manuell eingegebene Transport- und/oder Montagequalität zur Verbesserung der Korrelation verwendet. Ist die Transport- und/oder Montagequalität hingegen größer als der Grenzwert, so wird entweder auf das Ausgeben eines Signals verzichtet oder aber ein Signal ausgegeben, welches einen einwandfreien Zustand des Gebäudeverschlusselements signalisiert. Die beschriebene Vorgehensweise ermöglicht eine besonders einfache und zuverlässige Qualitätsüberwachung des Transport- und/oder Montagevorgangs.

Eine Weiterbildung der Erfindung sieht vor, dass die Transport- und/oder Montageüberwachungseinrichtung Bestandteil des Gebäudeverschlusselements oder einer von dem Gebäudeverschlusselement beabstandeten Zentralrecheneinrichtung ist. Hierauf wurde bereits hingewiesen. Die Verwendung der Zentralrecheneinrichtung als Transport- und/oder Montageüberwachungseinrichtung ermöglicht es auf besonders vorteilhafte Art und Weise, die Trainingsbetriebsart unter Verwendung der Zustandsgröße beziehungsweise des Zustandsgrößenverlaufs einer Mehrzahl von Sensoranordnungen beziehungsweise Gebäudeverschlusselementen vorzunehmen, sodass insoweit eine sehr große Datenbasis vorliegt.

Eine Weiterbildung der Erfindung sieht vor, dass die Sensoranordnung Bestandteil einer Mehrzahl von Sensoranordnungen mehrerer Gebäudeverschlusselemente ist, wobei in der Trainingsbetriebsart die Korrelation zwischen der Transport- und/oder Montagequalität einerseits und der Zustandsgröße und/oder dem Zustandsgrößenverlauf der Sensoranordnungen andererseits in der Transport- und/oder Montageüberwachungseinrichtung zwischengespeichert wird. Zusätzlich zu der Sensoranordnung liegen also wenigstens eine weitere Sensoranordnung oder vorzugsweise mehrere weitere Sensoranordnungen vor, welche gemeinsam die Mehrzahl von Sensoranordnungen bilden. Die Sensoranordnungen sind mehreren Gebäudeverschlusselementen zugeordnet.

Die Sensoranordnungen übermitteln die jeweilige Zustandsgröße und/oder den jeweiligen Zustandsgrößenverlauf, beispielsweise als Bestandteil des Zustandssignals oder als Zustandssignal, an die Transport- und/oder Montageüberwachungseinrichtung. Die Transport- und/oder Montageüberwachungseinrichtung ermittelt die Korrelation zwischen der Transport- und/oder Montagequalität einerseits und der Zustandsgröße beziehungsweise dem Zustandsgrößenverlauf andererseits und speichert diese zwischen. Hierbei werden die Transport- und/oder Montagequalität und die Zustandsgröße beziehungsweise der Zustandsgrößenverlauf der Mehrzahl von Sensoranordnungen zusammengefasst, sodass schlussendlich weniger Korrelationen als Sensoranordnungen vorliegen, insbesondere eine einzige Korrelation für alle Sensoranordnungen vorliegt.

Bevorzugt unterscheidet die Überwachungseinrichtung hierbei zwischen unterschiedlichen Typen der Sensoranordnung beziehungsweise des Gebäudeverschlusselements. Somit wird also für jeden Typ der Sensoranordnungen und/oder für jeden Typ der Gebäudeverschlusselemente eine eigene Korrelation ermittelt und zwischengespeichert. Hierdurch ist eine besonders zielgenaue Qualitätskontrolle möglich.

Eine Weiterbildung der Erfindung sieht vor, dass in der Überwachungsbetriebsart die Zustandsgröße und/oder der Zustandsgrößenverlauf an die Transport- und/oder Montageüberwachungseinrichtung übermittelt werden, die aus ihnen mittels der Korrelation die Transport- und/oder Montagequalität bestimmt und an die Sensoreinrichtung übermittelt, oder dass die Korrelation von der Transport- und/oder Montageüberwachungseinrichtung an die Sensoranordnung übertragen wird und die Transport- und/oder Montageüberwachungseinrichtung anhand der Korrelation unter Verwendung der Zustandsgröße und/oder des Zustandsgrößenverlaufs die Transport- und/oder Montagequalität ermittelt.

Für die Auswertung der Transport- und/oder Montagequalität in der Überwachungsbetriebsart bieten sich zwei unterschiedliche Vorgehensweisen an. Zum einen kann die Auswertung der Transport- und/oder Montagequalität von der Transport- und/oder Montageüberwachungseinrichtung vorgenommen werden. Zu diesem Zweck wird die Zustandsgröße beziehungsweise der Zustandsgrößenverlauf an diese übermittelt. Die Transport- und/oder Montageüberwachungseinrichtung bestimmt anhand der Zustandsgröße beziehungsweise des Zustandsgrößenverlaufs die Transport- und/oder Montagequalität und übermittelt diese zurück an die Sensoreinrichtung.

Alternativ ist es vorgesehen, dass die Transport- und/oder Montageüberwachungseinrichtung die Korrelation an die Sensoranordnung überträgt. Die Ermittlung der Transport- und/oder Montagequalität erfolgt in diesem Fall von der Sensoranordnung selbst, nämlich wiederum unter Verwendung der Zustandsgröße beziehungsweise des Zustandsgrößenverlaufs. In ersterem Fall ist stets sichergestellt, dass die aktuelle Korrelation verwendet wird. In letzterem Fall muss keine Datenübertragungsverbindung zwischen der Transport- und/oder Montageüberwachungseinrichtung und der Sensoranordnung bestehen. Bevorzugt wird die Korrelation bereits vor dem Transport- und/oder Montagevorgang an die Sensoranordnung übertragen und dort zwischengespeichert.

Die Erfindung betrifft weiterhin eine Sensoranordnung für ein Gebäudeverschlusselement, insbesondere zur Durchführung des Verfahrens gemäß den Ausführungen im Rahmen dieser Beschreibung, wobei die Sensoranordnung integraler Bestandteil des Gebäudeverschlusselements ist und wenigstens einen Zustandsgrößensensor zur Erfassung einer Zustandsgröße des Gebäudeverschlusselements aufweist. Dabei ist vorgesehen, dass die Sensoranordnung integraler Bestandteil des Gebäudeverschlusselements ist und dazu vorgesehen und ausgestaltet ist, während eines Transport- und/oder Montagevorgangs des Gebäudeverschlusselements zumindest zeitweise zum Erfassen der Zustandsgröße betrieben zu werden und wenigstens einmalig ein in Abhängigkeit von der erfassten Zustandsgröße bestimmtes Zustandssignal auszugeben.

Auf die Vorteile einer derartigen Ausgestaltung der Sensoranordnung beziehungsweise einer derartigen Vorgehensweise wurde bereits hingewiesen. Sowohl die Sensoranordnung als auch das Verfahren zu ihrem Betreiben können gemäß den Ausführungen im Rahmen dieser Beschreibung weitergebildet sein, sodass insoweit auf diese verwiesen wird.

Die Erfindung betrifft weiterhin ein Gebäudeverschlusselement mit einer Sensoranordnung gemäß den Ausführungen im Rahmen dieser Beschreibung. Hinsichtlich der Vorteile und möglicher vorteilhafter Weiterbildungen wird erneut auf die entsprechenden Ausführungen verwiesen.

Vorzugsweise betrifft die Erfindung wenigstens einen der nachfolgend genannten Aspekte:
1. Verfahren zum Betreiben einer Sensoranordnung für ein Gebäudeverschlusselement, wobei die Sensoranordnung wenigstens einen Zustandsgrößensensor zur Erfassung einer Zustandsgröße des Gebäudeverschlusselements aufweist, wobei die Sensoranordnung integraler Bestandteil des Gebäudeverschlusselements ist und während eines Transport- und/oder Montagevorgangs des Gebäudeverschlusselements zumindest zeitweise zum Erfassen der Zustandsgröße betrieben und wenigstens einmalig ein in Abhängigkeit von der erfassten Zustandsgröße bestimmtes Zustandssignal von der Sensoranordnung ausgegeben wird.
2. Verfahren nach Aspekt 1, wobei die Sensoranordung eine Stromquelle aufweist, die über einen Schalter an den Zustandsgrößensensor und/oder eine mit dem Zustandsgrößensensor elektrisch verbundene Auswertungselektronik elektrisch angeschlossen ist, wobei der Schalter nach einer Herstellung des Gebäudeverschlusselements zunächst in einer Deaktivierungseinstellung vorliegt, in welcher der Zustandsgrößensensor und/oder die Auswertungselektronik elektrisch von der Stromquelle separiert sind, und vor dem Transport- und/oder Montagevorgang in eine Aktivierungseinstellung gebracht wird, in welcher der Zustandsgrößensensor und/oder die Auswertungselektronik von der Stromquelle mit elektrischem Strom versorgt werden.
3. Verfahren nach einem der vorhergehenden Aspekte, wobei als Zustandsgrößensensor ein Beschleunigungssensor verwendet wird, mittels welchem die als Beschleunigung vorliegende Zustandsgröße gemessen wird, wobei bei einem Überschreiten eines Beschleunigungsschwellenwerts durch die gemessene Beschleunigung während des Transport- und/oder Montagevorgangs das ausgegebene Zustandssignal mit einer Fehlermeldung versehen wird.
4. Verfahren nach einem der vorhergehenden Aspekte, wobei als Zustandsgrößensensor ein Positionssensor verwendet wird, mittels welchem die als Istposition vorliegende Zustandsgröße gemessen wird, wobei bei einer Abweichung der gemessenen Istposition von einer in der Sensoranordnung hinterlegten Sollposition während des Transport- und/oder Montagevorgangs das ausgegebene Zustandssignal mit einer Fehlermeldung versehen wird.
5. Verfahren nach einem der vorhergehenden Aspekte, wobei als Zustandsgrößensensor ein Drehwinkelsensor verwendet wird, mittels welchem die als Istdrehwinkel vorliegende Zustandsgröße gemessen wird, wobei
   - bei einer Abweichung des gemessenen Istdrehwinkels von einem in der Sensoranordnung hinterlegten Solldrehwinkel während des Transport- und/oder Montagevorgangs das ausgegebene Zustandssignal mit einer Fehlermeldung versehen wird, oder wobei
   - bei einem Überschreiten eines Drehwinkelgrenzwerts durch einen aus dem Istdrehwinkel während des Transport- und/oder Montagevorgangs aggregierten Gesamtdrehwinkel das ausgegebene Zustandssignal mit einer Fehlermeldung versehen wird.
6. Verfahren nach einem der vorhergehenden Aspekte, wobei als Zustandsgrößensensor ein Geräuschsensor verwendet wird, mittels welchem die als Geräuschpegel vorliegende Zustandsgröße gemessen wird, wobei bei einem Überschreiten eines Geräuschpegelschwellenwerts durch den gemessenen Geräuschpegel während des Transport- und/oder Montagevorgangs das ausgegebene Zustandssignal mit einer Fehlermeldung versehen wird.
7. Verfahren nach einem der vorhergehenden Aspekte, wobei als Zustandsgrößensensor wenigstens einer der folgenden Sensoren verwendet wird: Helligkeitssensor, Temperatursensor, Wärmeflusssensor, Staubsensor, Luftfeuchtigkeitssensor, VOC-Sensor, CO₂-Sensor, O₃-Sensor, Strömungsgeschwindigkeitssensor und Lidarsensor.
8. Verfahren nach einem der vorhergehenden Aspekte, wobei anhand der erfassten Zustandsgröße auf einen Beginn und/oder ein Ende des Transport- und/oder Montagevorgangs erkannt wird, wobei ein Zeitpunkt des Beginns und/oder ein Zeitpunkt des Endes im Rahmen des Zustandssignals ausgegeben werden.
9. Verfahren nach einem der vorhergehenden Aspekte, wobei das Ausgeben des Zustandssignals ein Anzeigen des Zustandssignals für einen Monteur des Gebäudeverschlusselements und/oder ein Übermitteln des Zustandssignals an ein Mobilgerät und/oder an eine Zentralrecheneinrichtung umfasst.
10. Verfahren nach einem der vorhergehenden Aspekte, wobei die Zustandsgröße mehrfach erfasst und in einem Zustandsgrößenverlauf festgehalten wird.
11. Verfahren nach einem der vorhergehenden Aspekte, wobei in einer Trainingsbetriebsart einer Transport- und/oder Montageüberwachungseinrichtung nach dem Transport- und/oder Montagevorgang eine Transport- und/oder Montagequalität erfasst und mittels der Transport- und/oder Montageüberwachungseinrichtung mit der Zustandsgröße und/oder dem Zustandsgrößenverlauf korreliert wird und/oder in einer Überwachungsbetriebsart der Transport- und/oder Montageüberwachungseinrichtung mittels der Transport- und/oder Montageüberwachungseinrichtung aus der Zustandsgröße und/oder dem Zustandsgrößenverlauf die Transport- und/oder Montagequalität ermittelt wird.
12. Verfahren nach einem der vorhergehenden Aspekte, wobei die Sensoranordnung Bestandteil einer Mehrzahl von Sensoranordnungen mehrerer Gebäudeverschlusselemente ist, wobei in der Trainingsbetriebsart die Korrelation zwischen der Transport- und/oder Montagequalität einerseits und der Zustandsgröße und/oder dem Zustandsgrößenverlauf der Sensoranordnungen andererseits in der Transport- und/oder Montageüberwachungseinrichtung zwischengespeichert wird.
13. Verfahren nach einem der vorhergehenden Aspekte, wobei
   - in der Überwachungsbetriebsart die Zustandsgröße und/oder der Zustandsgrößenverlauf an die Transport- und/oder Montageüberwachungseinrichtung übermittelt werden, die aus ihnen mittels der Korrelation die Transport- und/oder Montagequalität bestimmt und an die Sensoreinrichtung übermittelt, oder dass
   - die Korrelation von der Transport- und/oder Montageüberwachungseinrichtung an die Sensoranordnung übertragen wird und die Transport- und/oder Montageüberwachungseinrichtung anhand der Korrelation unter Verwendung der Zustandsgröße und/oder des Zustandsgrößenverlaufs die Transport- und/oder Montagequalität ermittelt.
14. Sensoranordnung für ein Gebäudeverschlusselement, insbesondere zur Durchführung des Verfahrens nach einem oder mehreren der vorhergehenden Ansprüche, wobei die Sensoranordnung wenigstens einen Zustandsgrößensensor zur Erfassung einer Zustandsgröße des Gebäudeverschlusselements aufweist, wobei die Sensoranordnung integraler Bestandteil des Gebäudeverschlusselements ist und dazu vorgesehen und ausgestaltet ist, während eines Transport- und/oder Montagevorgangs des Gebäudeverschlusselements zumindest zeitweise zum Erfassen der Zustandsgröße betrieben zu werden und wenigstens einmalig ein in Abhängigkeit von der erfassten Zustandsgröße bestimmtes Zustandssignal auszugeben.
15. Gebäudeverschlusselement mit einer Sensoranordnung nach Aspekt 14.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind.

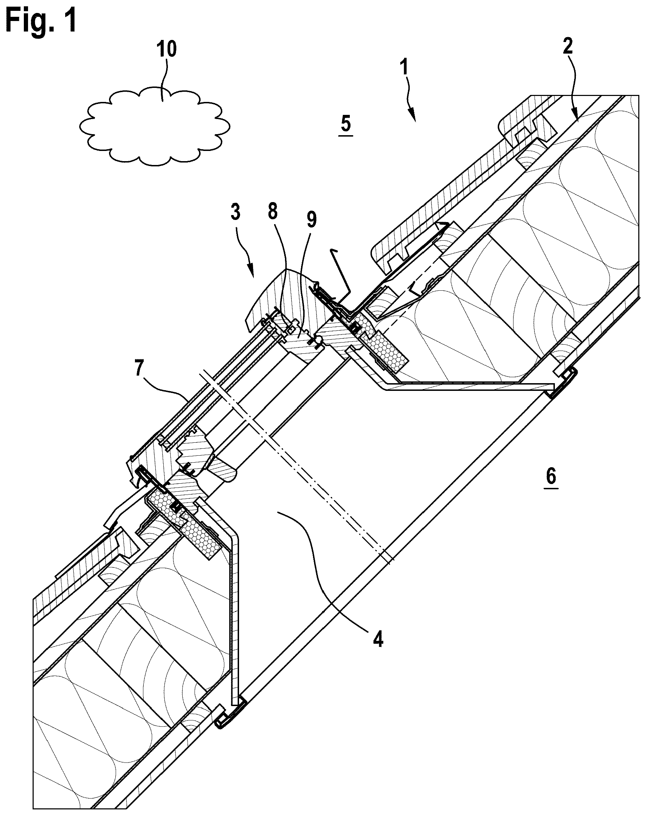

Die Erfindung wird nachfolgend anhand der in der Zeichnung dargestellten Ausgangsbeispiele näher erläutert, ohne dass eine Beschränkung der Erfindung erfolgt. Dabei zeigt die einzige
- Figur 1: eine schematische Schnittdarstellung eines Gebäudes mit einer Gebäudehülle sowie einem Gebäudeverschlusselement.

Die Figur 1 zeigt eine schematische Schnittdarstellung eines Gebäudes 1, welches eine Gebäudehülle 2 sowie ein Gebäudeverschlusselement 3 aufweist. Die Gebäudehülle 2 liegt in dem hier dargestellten Ausführungsbeispiel als Dach, insbesondere als Schrägdach, vor. In der Gebäudehülle 2 ist eine Ausnehmung 4 ausgebildet, welche die Gebäudehülle 2 vollständig durchgreift und insoweit eine Außenumgebung 5 des Gebäudes 1 mit einem Innenraum 6 des Gebäudes 1 verbindet, insbesondere strömungstechnisch und/oder optisch beziehungsweise lichttechnisch. Die Ausnehmung 4 ist mit dem Gebäudeverschlusselement 3 verschlossen, insbesondere strömungstechnisch. In dem hier dargestellten Ausführungsbeispiel liegt das Gebäudeverschlusselement 3 als Dachflächenfenster vor, welches über eine Verglasung 7 verfügt, sodass weiterhin eine optische Verbindung zwischen der Außenumgebung 5 und dem Innenraum 6 durch die Ausnehmung 4 hindurch vorliegt.

Das Gebäudeverschlusselement 3 verfügt über eine Sensoranordnung 8, die wenigstens einen Zustandsgrößensensor zur Erfassung einer Zustandsgröße des Gebäudeverschlusselements 3 aufweist. Die Sensoranordnung 8 ist integraler Bestandteil des Gebäudeverschlusselements 3. In dem hier dargestellten Ausführungsbeispiel ist sie beispielsweise in einen Blendrahmen 9 des Gebäudeverschlusselement 3 integriert. Die Sensoranordnung 8 wird während eines Transport- und/oder Montagevorgangs des Gebäudeverschlusselements 3 zumindest zeitweise zum Erfassen der Zustandsgröße betrieben. Wenigstens einmalig wird zudem ein in Abhängigkeit von der erfassten Zustandsgröße bestimmtes Zustandssignal von der Sensoranordnung 8 ausgegeben. Das Ausgeben des Zustandssignals kann während des Transport- und/oder Montagevorgangs erfolgen oder erst nach diesem. Das Ausgeben des Zustandssignals erfolgt insoweit beispielsweise unabhängig von dem Transport- und/oder Montagevorgang.

Weiterhin gezeigt ist eine Transport- und/oder Montageüberwachungseinrichtung 10, welche in dem hier dargestellten Ausführungsbeispiel als von dem Gebäudeverschlusselement 3 beabstandet angeordnete Zentralrecheneinrichtung ausgestaltet ist. Die Transport- und/oder Montageüberwachungseinrichtung 10 steht zumindest zeitweise in Datenübertragungsverbindung mit der Sensoranordnung 8. In einer Trainingsbetriebsart der Transport- und/oder Montageüberwachungseinrichtung 10 ist es vorgesehen, dass die Zustandsgröße beziehungsweise ein Zustandsgrößenverlauf im Rahmen des Zustandssignals von der Sensoranordnung 8 an die Transport- und/oder Montageüberwachungseinrichtung 10 übertragen wird. Zudem wird eine Transport- und/oder Montagequalität bestimmt und ebenfalls der Transport- und/oder Montageüberwachungseinrichtung 10 zur Verfügung gestellt. Das Bestimmen der Transport- und/oder Montagequalität erfolgt beispielsweise durch manuelle Eingabe, beispielsweise an einem Mobilgerät.

Die Transport- und/oder Montageüberwachungseinrichtung 10 ermittelt aus der Transport- und/oder Montagequalität und der Zustandsgröße beziehungsweise dem Zustandsgrößenverlauf eine Korrelation. Diese wird zwischengespeichert. Vorzugsweise wird der Transport- und/oder Montageüberwachungseinrichtung 10 die Transport- und/oder Montagequalität sowie die Zustandsgröße beziehungsweise der Zustandsgrößenverlauf nicht nur von dem einen Gebäudeverschlusselement 3 übermittelt, sondern jeweils von einer Mehrzahl an Gebäudeverschlusselementen 3.

Wurden während der Trainingsbetriebsart hinreichend Transport- und/oder Montagequalitäten sowie Zustandsgrößen beziehungsweise Zustandsgrößenverläufe erfasst und bei der Ermittlung der Korrelation berücksichtigt, so wird von der Trainingsbetriebsart auf eine Überwachungsbetriebsart umgeschaltet. In dieser wird die Korrelation verwendet, um aus einer von der Sensoranordnung 8 übermittelten Zustandsgröße beziehungsweise einem Zustandsgrößenverlauf auf die Transport- und/oder Montagequalität für diese Sensoranordnung 8 beziehungsweise das entsprechende Gebäudeverschlusselement 3 zu schließen.

Die beschriebene Vorgehensweise ermöglicht eine besonders einfache und zuverlässige Qualitätskontrolle eines Transport- und/oder Montagevorgangs des Gebäudeverschlusselements 3. Insbesondere ist es nur während der Trainingsbetriebsart notwendig, für das Gebäudeverschlusselement 3 die Transport- und/oder Montagequalität manuell zu erfassen. Nach Abschluss der Trainingsbetriebsart und während des Durchführens der Überwachungsbetriebsart wird die Transport- und/oder Montagequalität mittels der Transport- und/oder Montageüberwachungseinrichtung 10 ermittelt und, falls die Transport- und/oder Montagequalität einen Schwellenwert unterschreitet, eine geeignete Maßnahme eingeleitet. Beispielsweise wird ein Servicetechniker zur Kontrolle des Gebäudeverschlusselements 3 entsandt.

### BEZUGSZEICHENLISTE

- 1: Gebäude
- 2: Gebäudehülle
- 3: Gebäudeverschlusselement
- 4: Ausnehmung
- 5: Außenumgebung
- 6: Innenraum
- 7: Verglasung
- 8: Sensoranordnung
- 9: Blendrahmen
- 10: Transport- und/oder Montageüberwachungseinrichtung

## Patentansprüche

1. Verfahren zum Betreiben einer Sensoranordnung (8) für ein Gebäudeverschlusselement (3), wobei die Sensoranordnung (8) wenigstens einen Zustandsgrößensensor zur Erfassung einer Zustandsgröße des Gebäudeverschlusselements (3) aufweist, wobei die Sensoranordnung (8) integraler Bestandteil des Gebäudeverschlusselements ist und während eines Transport- und/oder Montagevorgangs des Gebäudeverschlusselements (3) zumindest zeitweise zum Erfassen der Zustandsgröße betrieben und wenigstens einmalig ein in Abhängigkeit von der erfassten Zustandsgröße bestimmtes Zustandssignal von der Sensoranordnung (8) ausgegeben wird, **dadurch gekennzeichnet, dass**
- als Zustandsgrößensensor ein Positionssensor verwendet wird, mittels welchem die als geodätische Istposition vorliegende Zustandsgröße gemessen wird, wobei bei einer Abweichung der gemessenen Istposition von einer in der Sensoranordnung (8) hinterlegten Sollposition während des Transport- und/oder Montagevorgangs das ausgegebene Zustandssignal mit einer Fehlermeldung versehen wird, und/oder dass
- als Zustandsgrößensensor ein eine geodätische Ausrichtung des Gebäudeverschlusselements (3) in wenigstens einer Raumrichtung messender Drehwinkelsensor verwendet wird, mittels welchem die als Istdrehwinkel vorliegende Zustandsgröße gemessen wird, wobei bei einer Abweichung des gemessenen Istdrehwinkels von einem in der Sensoranordnung (8) hinterlegten Solldrehwinkel während des Transport- und/oder Montagevorgangs das ausgegebene Zustandssignal mit einer Fehlermeldung versehen wird, oder wobei bei einem Überschreiten eines Drehwinkelgrenzwerts durch einen aus dem Istdrehwinkel während des Transport- und/oder Montagevorgangs aggregierten Gesamtdrehwinkel das ausgegebene Zustandssignal mit einer Fehlermeldung versehen wird.

2. Verfahren nach Anspruch 1, **dadurch gekennzeichnet, dass** die Sensoranordung (8) eine Stromquelle aufweist, die über einen Schalter an den Zustandsgrößensensor und/oder eine mit dem Zustandsgrößensensor elektrisch verbundene Auswertungselektronik elektrisch angeschlossen ist, wobei der Schalter nach einer Herstellung des Gebäudeverschlusselements (3) zunächst in einer Deaktivierungseinstellung vorliegt, in welcher der Zustandsgrößensensor und/oder die Auswertungselektronik elektrisch von der Stromquelle separiert sind, und vor dem Transport- und/oder Montagevorgang in eine Aktivierungseinstellung gebracht wird, in welcher der Zustandsgrößensensor und/oder die Auswertungselektronik von der Stromquelle mit elektrischem Strom versorgt werden.

3. Verfahren nach einem der vorhergehenden Ansprüche, **dadurch gekennzeichnet, dass** als Zustandsgrößensensor ein Beschleunigungssensor verwendet wird, mittels welchem die als Beschleunigung vorliegende Zustandsgröße gemessen wird, wobei bei einem Überschreiten eines Beschleunigungsschwellenwerts durch die gemessene Beschleunigung während des Transport- und/oder Montagevorgangs das ausgegebene Zustandssignal mit einer Fehlermeldung versehen wird.

4. Verfahren nach einem der vorhergehenden Ansprüche, **dadurch gekennzeichnet, dass** als Zustandsgrößensensor ein Geräuschsensor verwendet wird, mittels welchem die als Geräuschpegel vorliegende Zustandsgröße gemessen wird, wobei bei einem Überschreiten eines Geräuschpegelschwellenwerts durch den gemessenen Geräuschpegel während des Transport- und/oder Montagevorgangs das ausgegebene Zustandssignal mit einer Fehlermeldung versehen wird.

5. Verfahren nach einem der vorhergehenden Ansprüche, **dadurch gekennzeichnet, dass** als Zustandsgrößensensor wenigstens einer der folgenden Sensoren verwendet wird: Helligkeitssensor, Temperatursensor, Wärmeflusssensor, Staubsensor, Luftfeuchtigkeitssensor, VOC-Sensor, CO₂-Sensor, O₃-Sensor, Strömungsgeschwindigkeitssensor und Lidarsensor.

6. Verfahren nach einem der vorhergehenden Ansprüche, **dadurch gekennzeichnet, dass** anhand der erfassten Zustandsgröße auf einen Beginn und/oder ein Ende des Transport- und/oder Montagevorgangs erkannt wird, wobei ein Zeitpunkt des Beginns und/oder ein Zeitpunkt des Endes im Rahmen des Zustandssignals ausgegeben werden.

7. Verfahren nach einem der vorhergehenden Ansprüche, **dadurch gekennzeichnet, dass** das Ausgeben des Zustandssignals ein Anzeigen des Zustandssignals für einen Monteur des Gebäudeverschlusselements (3) und/oder ein Übermitteln des Zustandssignals an ein Mobilgerät und/oder an eine Zentralrecheneinrichtung umfasst.

8. Verfahren nach einem der vorhergehenden Ansprüche, **dadurch gekennzeichnet, dass** die Zustandsgröße mehrfach erfasst und in einem Zustandsgrößenverlauf festgehalten wird.

9. Verfahren nach einem der vorhergehenden Ansprüche, **dadurch gekennzeichnet, dass** in einer Trainingsbetriebsart einer Transport- und/oder Montageüberwachungseinrichtung (10) nach dem Transport- und/oder Montagevorgang eine Transport- und/oder Montagequalität erfasst und mittels der Transport- und/oder Montageüberwachungseinrichtung (10) mit der Zustandsgröße und/oder dem Zustandsgrößenverlauf korreliert wird und/oder in einer Überwachungsbetriebsart der Transport- und/oder Montageüberwachungseinrichtung (10) mittels der Transport- und/oder Montageüberwachungseinrichtung (10) aus der Zustandsgröße und/oder dem Zustandsgrößenverlauf die Transport- und/oder Montagequalität ermittelt wird.

10. Verfahren nach einem der vorhergehenden Ansprüche, **dadurch gekennzeichnet, dass** die Sensoranordnung (8) Bestandteil einer Mehrzahl von Sensoranordnungen mehrerer Gebäudeverschlusselemente (3) ist, wobei in der Trainingsbetriebsart die Korrelation zwischen der Transport- und/oder Montagequalität einerseits und der Zustandsgröße und/oder dem Zustandsgrößenverlauf der Sensoranordnungen andererseits in der Transport- und/oder Montageüberwachungseinrichtung (10) zwischengespeichert wird.

11. Verfahren nach einem der vorhergehenden Ansprüche, **dadurch gekennzeichnet, dass**
- in der Überwachungsbetriebsart die Zustandsgröße und/oder der Zustandsgrößenverlauf an die Transport- und/oder Montageüberwachungseinrichtung (10) übermittelt werden, die aus ihnen mittels der Korrelation die Transport- und/oder Montagequalität bestimmt und an die Sensoreinrichtung übermittelt, oder dass
- die Korrelation von der Transport- und/oder Montageüberwachungseinrichtung (10) an die Sensoranordnung (8) übertragen wird und die Transport- und/oder Montageüberwachungseinrichtung (10) anhand der Korrelation unter Verwendung der Zustandsgröße und/oder des Zustandsgrößenverlaufs die Transport- und/oder Montagequalität ermittelt.

12. Sensoranordnung (8) für ein Gebäudeverschlusselement (3), insbesondere zur Durchführung des Verfahrens nach einem oder mehreren der vorhergehenden Ansprüche, wobei die Sensoranordnung (8) wenigstens einen Zustandsgrößensensor zur Erfassung einer Zustandsgröße des Gebäudeverschlusselements (3) aufweist, wobei die Sensoranordnung (8) integraler Bestandteil des Gebäudeverschlusselements ist und dazu vorgesehen und ausgestaltet ist, während eines Transport- und/oder Montagevorgangs des Gebäudeverschlusselements (3) zumindest zeitweise zum Erfassen der Zustandsgröße betrieben zu werden und wenigstens einmalig ein in Abhängigkeit von der erfassten Zustandsgröße bestimmtes Zustandssignal auszugeben, **dadurch gekennzeichnet, dass**
- der Zustandsgrößensensor ein Positionssensor ist, mittels welchem die als geodätische Istposition vorliegende Zustandsgröße gemessen wird, wobei bei einer Abweichung der gemessenen Istposition von einer in der Sensoranordnung (8) hinterlegten Sollposition während des Transport- und/oder Montagevorgangs das ausgegebene Zustandssignal mit einer Fehlermeldung versehen wird, und/oder dass
- der Zustandsgrößensensor ein eine geodätische Ausrichtung des Gebäudeverschlusselements (3) in wenigstens einer Raumrichtung messender Drehwinkelsensor ist, mittels welchem die als Istdrehwinkel vorliegende Zustandsgröße gemessen wird, wobei bei einer Abweichung des gemessenen Istdrehwinkels von einem in der Sensoranordnung (8) hinterlegten Solldrehwinkel während des Transport- und/oder Montagevorgangs das ausgegebene Zustandssignal mit einer Fehlermeldung versehen wird, oder wobei bei einem Überschreiten eines Drehwinkelgrenzwerts durch einen aus dem Istdrehwinkel während des Transport- und/oder Montagevorgangs aggregierten Gesamtdrehwinkel das ausgegebene Zustandssignal mit einer Fehlermeldung versehen wird.

## Claims

1. Method for operating a sensor arrangement (8) for a building closure element (3), wherein the sensor arrangement (8) comprises at least one state variable sensor for detecting a state variable of the building closure element (3), wherein the sensor arrangement (8) is an integral part of the building closure element and is operated at least temporarily during a transport and/or assembly process of the building closure element (3) and at least once a state signal determined as a function of the detected state variable is output by the sensor arrangement (8), **characterised in that**
- a position sensor is used as the state variable sensor, by means of which the state variable present as the actual geodetic position is measured, wherein, in the event of a deviation of the measured actual position from a setpoint position stored in the sensor arrangement (8) during the transport and/or assembly process, the output state signal is provided with an error message, and/or that
- a rotation angle sensor measuring a geodetic orientation of the building closure element (3) in at least one spatial direction is used as a state variable sensor, by means of which the state variable present as the actual rotation angle is measured, wherein, in the event of a deviation of the measured actual rotation angle from a setpoint rotation angle stored in the sensor arrangement (8) during the transport and/or assembly process, the output state signal is provided with an error message, or wherein, if a rotation angle limit value is exceeded by a total rotation angle aggregated from the actual rotation angle during the transport and/or assembly process, the output state signal is provided with an error message.

2. Method according to claim 1, **characterised in that** the sensor arrangement (8) comprises a power source which is electrically connected via a switch to the state variable sensor and/or to an evaluation electronics electrically connected to the state variable sensor, wherein the switch, after the building closure element has been manufactured (3) is initially in a deactivation setting in which the state variable sensor and/or the evaluation electronics are electrically separated from the power source, and before the transport and/or assembly process is brought into an activation setting in which the state variable sensor and/or the evaluation electronics are supplied with electrical current from the power source.

3. Method according to one of the preceding claims, **characterised in that** an acceleration sensor is used as the state variable sensor, by means of which the state variable present as an acceleration is measured, wherein, if the measured acceleration exceeds an acceleration threshold value during the transport and/or assembly process, the output state signal is provided with an error message.

4. Method according to one of the preceding claims, **characterised in that** a noise sensor is used as a state variable sensor, by means of which the state variable present as a noise level is measured, wherein, if the measured noise level exceeds a noise level threshold value during the transport and/or assembly process, the output state signal is provided with an error message.

5. Method according to one of the preceding claims, **characterised in that** at least one of the following sensors is used as a state variable sensor: brightness sensor, temperature sensor, heat flow sensor, dust sensor, air humidity sensor, VOC sensor, CO₂ sensor, O₃ sensor, flow velocity sensor and lidar sensor.

6. Method according to one of the preceding claims, **characterised in that** the detected state variable is used to detect the start and/or end of the transport and/or assembly process, wherein a start time and/or an end time are output as part of the state signal.

7. Method according to one of the preceding claims, **characterised in that** the output of the state signal comprises displaying the state signal for an installer of the building closure element (3) and/or transmitting the state signal to a mobile device and/or to a central computer device.

8. Method according to one of the preceding claims, **characterised in that** the state variable is recorded multiple times and stored in a state variable history.

9. Method according to one of the preceding claims, **characterised in that**, in a training mode of a transport and/or assembly monitoring device (10) after the transport and/or assembly process, a transport and/or assembly quality is detected and correlated with the state variable or the state variable history by means of the transport and/or assembly monitoring device (10) and/or is determined in a monitoring mode of the transport and/or assembly monitoring device (10) from the state variable or the state variable history by means of the transport and/or assembly monitoring device (10).

10. Method according to one of the preceding claims, **characterised in that** the sensor arrangement (8) is part of a plurality of sensor arrangements of several building closure elements (3) ( ), wherein, in the training mode, the correlation between the transport and/or assembly quality on the one hand and the state variable and/or the state variable history of the sensor arrangements on the other hand is temporarily stored in the transport and/or assembly monitoring device (10).

11. Method according to one of the preceding claims, **characterised in that**
- in the monitoring mode, the state variable and/or the state variable history are transmitted to the transport and/or assembly monitoring device (10), which determines the transport and/or assembly quality from them by means of the correlation and transmits it to the sensor device, or that
- the correlation is transmitted from the transport and/or assembly monitoring device (10) to the sensor arrangement (8) and the transport and/or assembly monitoring device (10) determines the transport and/or assembly quality on the basis of the correlation using the state variable and/or the state variable history.

12. Sensor arrangement (8) for a building closure element (3), in particular for carrying out the method according to one or more of the preceding claims, wherein the sensor arrangement (8) comprises at least one state variable sensor for detecting a state variable of the building closure element (3), wherein the sensor arrangement (8) is an integral part of the building closure element and is provided and configured to be operated at least temporarily during a transport and/or assembly process of the building closure element (3) in order to detect the state variable and to output at least once a state signal determined as a function of the detected state variable. **characterised in that**
- the state variable sensor is a position sensor, by means of which the state variable present as the actual geodetic position is measured, wherein, in the event of a deviation of the measured actual position from a setpoint position stored in the sensor arrangement (8) during the transport and/or assembly process, the output state signal is provided with an error message, and/or **in that**
- the state variable sensor is a rotation angle sensor measuring a geodetic alignment of the building closure element (3) in at least one spatial direction, by means of which the state variable present as the actual rotation angle is measured, wherein, in the event of a deviation of the measured actual rotation angle from a setpoint rotation angle stored in the sensor arrangement (8) during the transport and/or assembly process, the output state signal is provided with an error message, or wherein, if a rotation angle limit value is exceeded by a total rotation angle aggregated from the actual rotation angle during the transport and/or assembly process, the output state signal is provided with an error message.

## Revendications

1. Procédé de fonctionnement d'un ensemble de détection (8) pour un élément de fermeture de bâtiment (3), dans lequel l'ensemble de détection (8) présente au moins un capteur de grandeur d'état permettant d'enregistrer une grandeur d'état de l'élément de fermeture de bâtiment (3), dans lequel l'ensemble de détection (8) fait partie intégrante de l'élément de fermeture de bâtiment et est utilisé au moins temporairement pour enregistrer la grandeur d'état pendant une opération de transport et/ou de montage de l'élément de fermeture de bâtiment (3) et un signal d'état déterminé est émis au moins une fois par l'ensemble de détection (8) en fonction de la grandeur d'état enregistrée,
**caractérisé en ce que**
- un capteur de position, au moyen duquel la grandeur d'état tenant lieu de position réelle géodésique est mesurée, est utilisé comme capteur de grandeur d'état, dans lequel, en cas d'écart entre la position réelle mesurée et une position de consigne enregistrée dans l'ensemble de détection (8) pendant l'opération de transport et/ou de montage, le signal d'état émis est accompagné d'un message d'erreur, et/ou **en ce que**
- un capteur d'angle de rotation, mesurant une orientation géodésique de l'élément de fermeture du bâtiment (3) dans au moins une direction spatiale et au moyen duquel la grandeur d'état tenant lieu d'angle de rotation réel est mesurée, est utilisé comme capteur de grandeur d'état, dans lequel, en cas d'écart entre l'angle de rotation réel mesuré et un angle de rotation de consigne enregistré dans l'ensemble de détection (8) pendant l'opération de transport et/ou de montage, le signal d'état émis est accompagné d'un message d'erreur, ou, en cas de dépassement d'une valeur limite d'angle de rotation par un angle de rotation total agrégé à partir de l'angle de rotation réel pendant l'opération de transport et/ou de montage, le signal d'état émis est accompagné d'un message d'erreur.

2. Procédé selon la revendication 1, **caractérisé en ce que** l'ensemble de détection (8) présente une source de courant qui est raccordée électriquement par l'intermédiaire d'un commutateur au capteur de grandeur d'état et/ou à une électronique d'évaluation reliée électriquement au capteur de grandeur d'état, dans lequel le commutateur se trouve, après la création de l'élément de fermeture de bâtiment (3), d'abord dans un réglage de désactivation au sein duquel le capteur de grandeur d'état et/ou l'électronique d'évaluation sont séparés électriquement de la source de courant et est amené, avant l'opération de transport et/ou de montage, dans un réglage d'activation au sein duquel le capteur de grandeur d'état et/ou l'électronique d'évaluation sont alimentés en courant électrique par la source de courant.

3. Procédé selon l'une quelconque des revendications précédentes, **caractérisé en ce qu'**un capteur d'accélération, au moyen duquel la grandeur d'état tenant lieu d'accélération est mesurée, est utilisé comme capteur de grandeur d'état, dans lequel, en cas de dépassement d'une valeur de seuil d'accélération par l'accélération mesurée pendant l'opération de transport et/ou de montage, le signal d'état émis est accompagné d'un message d'erreur.

4. Procédé selon l'une quelconque des revendications précédentes, **caractérisé en ce qu'**un capteur de bruit, au moyen duquel la grandeur d'état tenant lieu de niveau de bruit est mesurée, est utilisé comme capteur de grandeur d'état, dans lequel, en cas de dépassement d'une valeur de seuil de niveau de bruit par le niveau de bruit mesuré pendant l'opération de transport et/ou de montage, le signal d'état émis est accompagné d'un message d'erreur.

5. Procédé selon l'une quelconque des revendications précédentes, **caractérisé en ce qu'**au moins un des capteurs ci-dessous est utilisé comme capteur de grandeur d'état : capteur de luminosité, capteur de température, capteur de flux de chaleur, capteur de poussière, capteur d'humidité, capteur de COV, capteur de CO2, capteur d'O3, capteur de débit et capteur lidar.

6. Procédé selon l'une quelconque des revendications précédentes, **caractérisé en ce qu'**un début et/ou une fin de l'opération de transport et/ou de montage est/sont identifié(s) à l'aide de la grandeur d'état enregistrée, dans lequel un moment de début et/ou un moment de fin est émis dans le cadre du signal d'état.

7. Procédé selon l'une quelconque des revendications précédentes, **caractérisé en ce que** l'émission du signal d'état comprend l'affichage du signal d'état pour un installateur de l'élément de fermeture de bâtiment (3) et/ou la transmission du signal d'état à un appareil mobile et/ou à un dispositif informatique central.

8. Procédé selon l'une quelconque des revendications précédentes, **caractérisé en ce que** la grandeur d'état est enregistrée plusieurs fois et est reportée sur une courbe de grandeur d'état.

9. Procédé selon l'une quelconque des revendications précédentes, **caractérisé en ce que**, dans un mode d'entraînement d'un dispositif de surveillance de transport et/ou de montage (10) et après l'opération de transport et/ou de montage, une qualité de transport et/ou de montage est enregistrée et est corrélée avec la grandeur d'état et/ou la courbe de grandeur d'état au moyen du dispositif de surveillance de transport et/ou de montage (10) et/ou, dans un mode de surveillance du dispositif de surveillance de transport et/ou de montage (10), la qualité de transport et/ou de montage est déterminée au moyen du dispositif de surveillance de transport et/ou de montage (10) à partir de la grandeur d'état et/ou de la courbe de grandeur d'état.

10. Procédé selon l'une quelconque des revendications précédentes, **caractérisé en ce que** l'ensemble de détection (8) fait partie d'une pluralité d'ensembles de détection de plusieurs éléments de fermeture de bâtiment (3), dans lequel, dans le mode d'entraînement, la corrélation entre la qualité de transport et/ou de montage d'une part et la grandeur d'état et/ou la courbe de grandeur d'état des ensembles de détection d'autre part est stockée temporairement dans le dispositif de surveillance de transport et/ou de montage (10).

11. Procédé selon l'une quelconque des revendications précédentes, **caractérisé en ce que**
- dans le mode de surveillance, la grandeur d'état et/ou la courbe de grandeur d'état est/sont transmise(s) au dispositif de surveillance de transport et/ou de montage (10), qui détermine la qualité de transport et/ou de montage à partir de celle(s)-ci au moyen de la corrélation et la transmet à l'ensemble de détection, ou **en ce que**
- la corrélation est transmise à l'ensemble de détection (8) par le dispositif de surveillance de transport et/ou de montage (10) et le dispositif de surveillance de transport et/ou de montage (10) détermine la qualité de transport et/ou de montage à l'aide de la corrélation en utilisant la grandeur d'état et/ou la courbe de grandeur d'état.

12. Ensemble de détection (8) pour un élément de fermeture de bâtiment (3), en particulier pour la mise en œuvre du procédé selon l'une quelconque ou plusieurs des revendications précédentes, dans lequel l'ensemble de détection (8) présente au moins un capteur de grandeur d'état permettant d'enregistrer une grandeur d'état de l'élément de fermeture de bâtiment (3), dans lequel l'ensemble de détection (8) fait partie intégrante de l'élément de fermeture de bâtiment et est prévu et conçu pour être utilisé au moins temporairement pour enregistrer la grandeur d'état pendant une opération de transport et/ou de montage de l'élément de fermeture de bâtiment (3) et pour émettre au moins une fois un signal d'état déterminé en fonction de la grandeur d'état enregistrée,
**caractérisé en ce que**
- le capteur de grandeur d'état est un capteur de position au moyen duquel la grandeur d'état tenant lieu de position réelle géodésique est mesurée, dans lequel, en cas d'écart entre la position réelle mesurée et une position de consigne enregistrée dans l'ensemble de détection (8) pendant l'opération de transport et/ou de montage, le signal d'état émis est accompagné d'un message d'erreur, et/ou **en ce que**
- le capteur de grandeur d'état est un capteur d'angle de rotation, mesurant une orientation géodésique de l'élément de fermeture du bâtiment (3) dans au moins une direction spatiale et au moyen duquel la grandeur d'état tenant lieu d'angle de rotation réel est mesurée, dans lequel, en cas d'écart entre l'angle de rotation réel mesuré et un angle de rotation de consigne enregistré dans l'ensemble de détection (8) pendant l'opération de transport et/ou de montage, le signal d'état émis est accompagné d'un message d'erreur, ou, en cas de dépassement d'une valeur limite d'angle de rotation par un angle de rotation total agrégé à partir de l'angle de rotation réel pendant l'opération de transport et/ou de montage, le signal d'état émis est accompagné d'un message d'erreur.
